# EUROPEAN PATENT APPLICATION

(11) **EP 4 835 918 A1**
(43) Date of publication of application: **04.11.2026**
(21) Application number: 25174012.2
(22) Date of filing: 02.05.2025
(51) Int. Cl.: H01B 7/14, B63B 35/04, B63C 11/52, E21B 41/00, F16L 1/12, H02G 1/10, H02G 9/02, H02G 9/12

(54) **METHOD OF LAYING AT LEAST ONE SUBMARINE POWER CABLE ON THE SEABED**

(71) Applicant: NKT HV Cables AB, 371 65 Lyckeby (SE)
(72) Inventor: STEVENSON, Ian, Newcastle, BT33 0QH (GB)
(74) Representative: Kransell & Wennborg KB

(57) **Abstract**

A method of laying at least one submarine power cable on a seabed from a marine vessel, the method comprising: A) arranging a touchdown location guide device around the at least one submarine power cable, B) steering the touchdown location guide device subsea to a desired touchdown area on the seabed with the at least one submarine power cable arranged inside the touchdown location guide device, and C) landing the at least one submarine power cable at the desired touchdown area.

## Description

### TECHNICAL FIELD

The present disclosure generally relates to the laying of one or more submarine power cables on the seabed from a marine vessel.

### BACKGROUND

Submarine power cables are installed from marine vessels, such as cable laying ships or barges.

Recently power cable systems are starting to be designed with more than two individual power cables, especially in DC applications. This will introduce new installation complexities compared to a cable system with fewer than three individual power cables.

Additionally, there is a trend of installing submarine power cables in deeper water than in which submarine power cables have traditionally been laid.

When laying even a single submarine power cable on the seabed it may be challenging to land the submarine power cables at an intended touchdown point on the seabed due to subsea environmental forces such as currents that may cause the submarine power cable to flap/whip and deviate from the planned lay line. This may become more pronounced when laying several submarine power cables at the same time due to the increased surface area ratio to cable group or bundle density and/or when laying submarine power cables in deepwater environments.

### SUMMARY

In view of the above an object of the present disclosure is to provide a method of laying at least one submarine power cable on a seabed from a marine vessel, which solves or at least mitigates the problems of the prior art.

There is hence provided a method of laying at least one submarine power cable on a seabed from a marine vessel, the method comprising: A) arranging a touchdown location guide device around the at least one submarine power cable, B) steering the touchdown location guide device subsea to a desired touchdown area on the seabed with the at least one submarine power cable arranged inside the touchdown location guide device, and C) landing the at least one submarine power cable at the desired touchdown area.

Thus, if for example a plurality of submarine power cables is laid at the same time, they are all arranged in the touchdown location guide device and their collective landing on the seabed can be achieved in a controlled manner in the desired touchdown area.

In case the laying depth is large, and it is required to land the at least one submarine power cable precisely on the seabed, for example due to topographical reasons, the touchdown location guide device will be able to ensure that the at least one submarine power cable lands in the desired touchdown area.

The desired touchdown area may be an area of predefined size on the seabed, containing a desired touchdown point.

According to one example, the laying involves laying the at least one submarine power cable at a water depth of at least 800 m, such as at least 900 m, or at least 1000 m. The distance between the seabed and the water surface may thus be at least 800 m, such as at least 900 m, such as at least 1000 m.

According to one embodiment step B) involves steering the touchdown location guide device by means of a winch or crane aboard the marine vessel, to which the touchdown location guide device is connected by wire, or by means of a remotely operated vehicle, ROV connected to the touchdown location guide device.

According to one embodiment the touchdown location guide device is openable, wherein step A) involves opening the touchdown location guide device and placing the at least one submarine power cable inside the touchdown location guide device.

According to one embodiment step A) involves operating an ROV to open the touchdown location guide device, and to close the touchdown location guide device subsea after the touchdown location guide device has been placed around the at least one submarine power cable.

One embodiment comprises D) removing the touchdown location guide device from the at least one submarine power cable after step C), when the laying has been completed, by means of an ROV.

In one embodiment step D) involves operating an ROV to open the touchdown location guide device.

According to one embodiment the touchdown location guide device has a top and a bottom, wherein the bottom is provided with at least one weight making the touchdown location guide device heavier at the bottom than at the top.

According to one embodiment the touchdown location guide device is a funnel device.

According to one embodiment the touchdown location guide device comprises a deployment attachment point, and a steering attachment point different from the deployment attachment point, the method comprising deploying the touchdown location guide device into the seawater from the marine vessel with a winch or crane connected to the deployment attachment point by means of a wire, and disconnecting the wire from the deployment attachment point subsea and connecting the wire to the steering attachment point prior to step B).

One embodiment comprises performing the disconnecting and connecting of the wire by means of an ROV.

According to one embodiment the steering attachment point is arranged at a narrow axial end of the touchdown location guide device, and the deployment attachment point is arranged between the steering attachment point and a wide axial end of the touchdown location guide device.

According to one embodiment the touchdown location guide device is a roller window, comprising a plurality of rollers arranged at angle relative to each other, forming a frame.

According to one embodiment the at least one submarine power cable is at least two submarine power cables.

In one example the at least one power cable is at least three submarine power cables.

According to one embodiment in steps A-C) the at least two, or at least three, submarine power cables lay flat, side by side, on the vessel chute or lay wheel as they are laid down in the seawater.

The at least two submarine power cables may be bundled on the marine vessel prior to them being lowered into the seawater. Alternatively, the at least two submarine power cables may be lowered into the seawater in a free configuration, without being bundled.

According to one embodiment the touchdown location guide device comprises a touchdown location monitoring system generating position data for finding the desired touchdown area, wherein step C) involves finding the desired touchdown area based on the position data.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 is a schematic plan view of an example of a back deck of a marine vessel;
Figs 2-3 are schematic perspective views of an example of a touchdown point guide device;
Fig. 4 is a front view of another example of a touchdown point device; and
Fig. 5 is a flowchart of a method of simultaneously laying three or more elongate flexible members on a seabed from the marine vessel.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

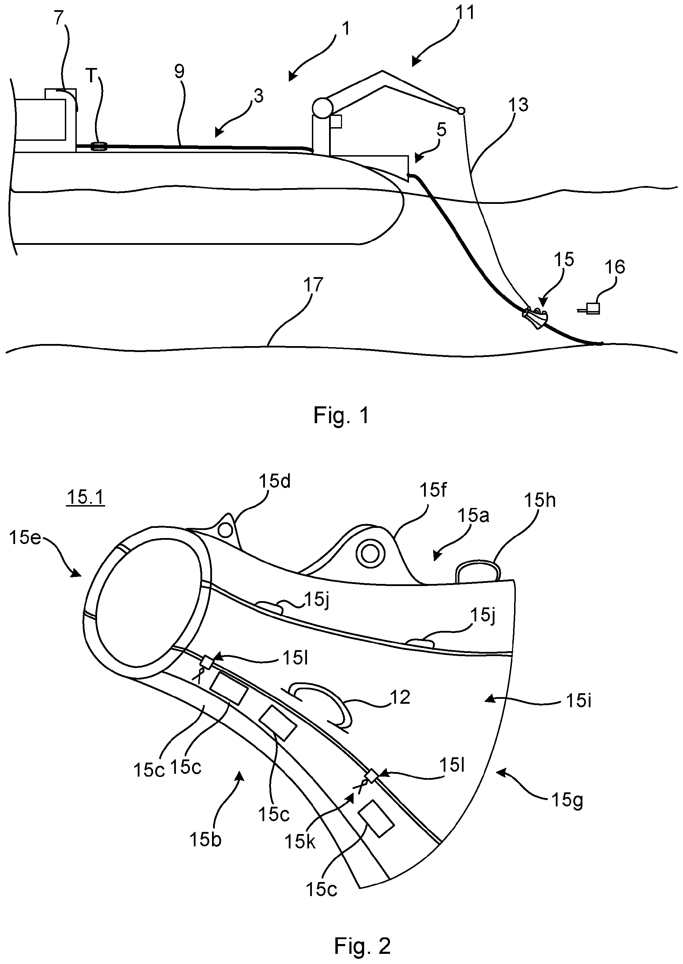

Fig. 1 is a plan view of a back deck 3 of a marine vessel 1.

The marine vessel 1 is an installation vessel, for example a cable laying vessel or a cable laying barge.

The marine vessel 1 has a vessel chute or lay wheel 5. The vessel chute or lay wheel 5 may be provided at the aft of the marine vessel 1.

The marine vessel 1 is configured for laying one or more than one submarine power cables 9 simultaneously on the seabed via the vessel chute or lay wheel 5.

The submarine power cable or submarine power cables may be a DC cable or cables, such as an HVDC cable or HVDC cables, or an AC cable or cables.

Additionally, in some examples an external fibre optic cable may be laid on the seabed together with the one or more submarine power cables.

The marine vessel 1 may be provided with one or more lay tensioners, or tensioning devices, T. The lay tensioner or tensioners T may be arranged on the back deck 3. Each lay tensioner T may for example be one of a track tensioner or a capstan lay wheel.

The one or more lay tensioner T is/are configured to advance the one or more submarine power cables 9 on the back deck 3 towards the vessel chute or lay wheel 5 for lowering the one or more submarine power cables 9 into the seawater.

According to the example, the number of lay tensioners T is the same as the number of submarine power cables 9 to be laid in the seawater at the same time, i.e., one for each submarine power cable 9. There could in other examples be fewer lay tensioners than the number of submarine power cables 9 to be laid at the same time, if more than one submarine power cable 9 is to be laid, or there could be more lay tensioners than the number of submarine power cables 9 that are to be laid. For instance, two submarine power cables 9 may in some examples be arranged in a piggybacked configuration and advanced along the back deck by a single lay tensioner T, e.g., by a twin cable tensioning device.

The marine vessel 1 comprises at least one cable storage unit 7 such as a carousel, turntable, or cable drum. Each submarine power cable 9 to be laid on or underneath the seabed may be arranged in a respective cable storage unit 7. Each submarine power cable 9 may be paid out from the respective cable storage unit 7 and advanced on the back deck 3 towards aft and lowered into the seawater from the vessel chute or lay wheel 5.

The marine vessel 1 comprise a winch or crane 11. The winch or crane 11 may comprise a wire 13 which can be connected to a touchdown point guide device 15 configured to be arranged around the submarine power cable 9 or submarine power cables 9 when the submarine power cables(s) 9 is/are being laid on or underneath the seabed 17, for holding together all submarine power cables 9 and/or controlling the touchdown point of the submarine power cable(s) 9 on the seabed 17 as will be described in more detail herein.

Fig. 2 schematically depicts an example of a touchdown point guide device 15. According to the example, the touchdown location guide device 15^{.}1 is a funnel device. The touchdown location guide device 15.1 has the shape of a funnel.

The touchdown location guide device 15 has top, or top side, 15a and a bottom, or bottom side, 15b opposite to the top 15a. The bottom 15b is provided with at least one weight 15c making the touchdown point location guide device 15 heavier at the bottom 15b than at the top 15a. For example, the bottom 15b may be made of a material that has a higher density than the top 15a, and/or one or more weights 15c may be attached to the bottom 15b. The one or more weights 15c may for example be attached to an outer surface of the bottom 15b. The one or more weights 15c may be made of metal such as steel, e.g., stainless steel or galvanised steel, or lead.

The touchdown location guide device 15.1 comprises a steering attachment point 15d and a deployment attachment point 15f. The deployment attachment point 15f is different from the steering attachment point 15d. The steering attachment point 15d is provided at the top 15a. The deployment attachment point 15f is provided at the top 15a.

The steering attachment point 15d may be a first padeye.

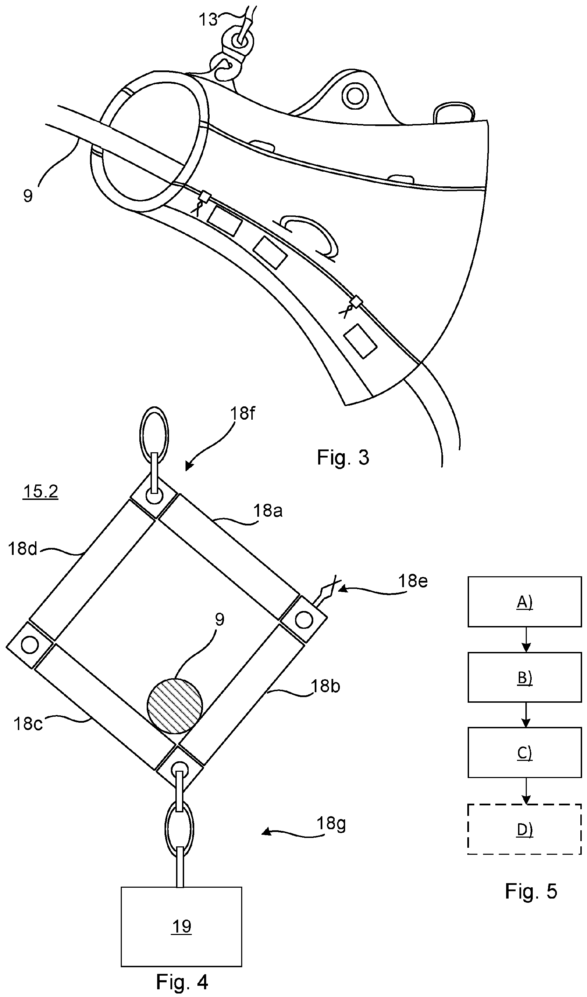

The touchdown location guide device 15.1 may comprise a swivel ring attached to the steering attachment point 15d, shown in Fig. 3.

The deployment attachment point 15f may be a second padeye.

The steering attachment point 15d is arranged at, or close to, a narrow axial end 15e of the touchdown location guide device 15.1.

The deployment attachment point 15f is arranged between the steering attachment point 15d and a wide axial end 15g of the touchdown location guide device 15.1.

The narrow axial end 15e is a longitudinal axial end of the funnel shaped touchdown location guide device 15.1 at which the radial dimension of the touchdown location guide device 15.1 is smaller than at the wide axial end 15g. The touchdown location guide device 15.1 has a longitudinal axis which extends between the narrow axial end 15e and the wide axial end 15g.

The touchdown location guide device 15.1 is hollow, having a longitudinal axial through-opening extending through the touchdown location guide device 15.1 from the narrow axial end 15e to the wide axial end 15g.

The touchdown location guide device 15.1 may comprise an ROV grab handle 15h. The ROV grab handle 15h may be arranged at the top 5a, for example at or close to the wide axial end 15g.

According to the example, the deployment attachment point 15f is arranged between the ROV grab handle 15h and the steering attachment point 15d.

According to the example, the touchdown location guide device 15.1 comprises a door 15i. The door 15i may be a lateral door arranged between the top 15a and the bottom 15b in the circumferential direction of the touchdown location guide device 15.1.

The door 15i may be hinged. The touchdown location guide device 15.1 may comprise one or more hinges 15j with which the door 15i is mounted in a hinged manner to a body of the touchdown location guide device 15.1.

The door 15i may be hinged such that it swings or pivots about an axis parallel with a line connecting the narrow axial end 15e with the wide axial end 15g on the outside surface of the touchdown location guide device 15.1.

The door 15i may extend all the way from the narrow axial end 15e to the wide axial end 15g. When the door 15i is opened, an opening is thus formed along the entire longitudinal axial length of the touchdown location guide device 15.1, i.e., from the narrow axial end 15e to the wide axial end 15g. A submarine power cable 9 can thus be received by the touchdown location guide device 15.1 subsea, or above the water surface, when the door 15i is open.

The door 15i may be provided with a handle 12. The handle 12 is configured to enable an ROV to open and close the door subsea.

The touchdown location guide device 15.1 may comprise locking members 15l such as mechanical locking members. The locking members 15l are configured to enable locking of the door 15i in a closed position. The locking members 15l may be configured such that they can be operated by an ROV. The door 15i may be provided with one or more lock handles 15k. The one or more lock handles 15k are configured to facilitate for an ROV to operate the locking members 15l and thus unlock and lock the door 15i subsea. The one or more lock handles 15k may for example be fishtail handles as schematically shown in Figs 2-3.

Fig. 3 shows the touchdown location guide device 15.1 with a submarine power cable 9 extending through it during a laying operation of the submarine power cable 9 in which the wire 13 is attached to the steering attachment point 15d.

Fig. 4 schematically depicts another example of a touchdown location guide device 15. The touchdown location guide device 15.2 is a roller window.

The touchdown location guide device 15.2 comprising a plurality of rollers 18a, 18b, 18c, and 18d arranged at angle relative to each other, forming a frame. The frame is configured to receive the at least one submarine power cable 9. The angle may for example be about 90° but other angles are also possible, and the angle between different pairs of rollers 18a-18d could even differ in some examples. The rollers 18a-18d may form a quadrilateral frame.

The frame may be openable. The touchdown location guide device 15.2 may comprise a handle 18e with which the frame can be opened. One of the rollers 18a-18d may thus be displaced or pivoted relative to the other rollers 18a-18d such that the frame opens.

The touchdown location guide device 15.2 has a top 18f and a bottom 18g. The bottom 18g is provided with at least one weight 19 making the touchdown location guide device 15.2 heavier at the bottom 18g than at the top 18f. The weight 19 may in some examples be an external weight attached to an underside of the frame formed by the rollers 18a-18d.

A method of laying at least one submarine power cable 9 on a seabed 17 from the marine vessel 1 using the touchdown location guide device 15, 15.1, 15 will now be described with reference to the flowchart in Fig. 5.

In a step A) the touchdown location guide device 15, 15.1, 15.2 is arranged around the at least one submarine power cable 9. Thus, in case there are several submarine power cables 9 that are to be laid on or underneath the seabed at the same time, the touchdown location guide device 15, 15.1, 15.2 is arranged around all these submarine power cables 9.

Step A) may be carried out aboard the marine vessel 1, for example on the back deck 3, or subsea after the submarine power cable or cables 9 has/have been laid in the seawater from the chute or lay wheel 5.

In one example, the touchdown location guide device 15, 15.1, 15.2 is deployed in the seawater by means of the crane or winch 11 with the wire 13 attached to the deployment attachment point 15f. The touchdown location guide device 15, 15.1, 15.2 may in this case be laid in the seawater from the vessel chute or lay wheel 5.

In examples in which step A) is carried out subsea, an ROV 16, shown in Fig. 1, may approach the touchdown location guide device 15, 15.1, 15.2 subsea, which at this point may be oriented horizontally by suspension from the wire 13. The ROV 16 may disconnect the wire 13 from the deployment attachment point 15f and connect the wire 13 to the steering attachment point 15d subsea. The ROV 16 may during this time hold the touchdown location guide device 15, 15.1, 15.2 in the ROV grab handle 15h.

Further, the ROV 16 may open the door 15i or frame of the touchdown location guide device 15.1, 15.2 by means of the handle 12, 18e and place the one or more submarine power cables 9 suspended from the marine vessel 1 and hanging in the water column, inside the touchdown location guide device 15.1, 15.2. The door 15i or frame is then closed by the ROV 16. The door 15i or frame is thus closed.

In a step B) the touchdown location guide device 15, 15.1, 15.2 is steered subsea to a desired touchdown area on the seabed 17 with the at least one submarine power cable 9 arranged inside the touchdown location guide device 15, 15.1, 15.2.

The steering in step B) may be performed by means of the wire 13 via the winch or crane 11 on the marine vessel 1, or by the ROV 16 holding the touchdown location guide device 15, 15.1, 15.2 in the ROV grab handle 15h.

In a step C) the at least one submarine power cable 9 is landed in the desired touchdown area. The touchdown location guide device 15, 15.1, 15.2 is at this point still arranged around the at least one submarine power cable 9 and controls the touchdown location of the at least one submarine power cable 9 via the ROV 16 or the wire 13.

In one example, in a step D) the touchdown location guide device 1₅, 15.1, 15.2 is removed from the at least one submarine power cable 9 after step C), after the cable laying has been completed, by means of the ROV 16. The door 15i or the frame is thus opened by the ROV 16, allowing for removing the touchdown location guide device 15, 15.1, 15.2 from the at least one submarine power cable 9. The door 15i or the frame may subsequently be closed by the ROV 16. The ROV 16 may disconnect the wire 13 from the steering attachment point 15d and connect it to the deployment attachment point 15f. Subsequently, the touchdown location guide device 15, 15.1, 15.2 may be hoisted up to the marine vessel 1.

In examples in which two or more submarine power cables 9 are laid on the seabed 17 simultaneously in steps A-C), the at least two submarine power cables 9 may lay flat, side by side, on the vessel chute or lay wheel 5 as they are laid down in the seawater. The submarine power cables 9 may be bundled on the back deck 3 or they may be arranged freely, without having been bundled, when lowered into the seawater.

The touchdown location guide device 15, 15.1, 15.2, may comprise a touchdown location monitoring system (not shown). The touchdown location monitoring system may for example be sonar-based, camera-based, and/or comprise a positioning beacon. The touchdown location monitoring system is configured to generate position or positioning data for finding the desired touchdown area. In this case, step C) may involve finding the desired touchdown area based on the position or positioning data.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Method of laying at least one submarine power cable (9) on a seabed (17) from a marine vessel (1), the method comprising:
A) arranging a touchdown location guide device (15; 15.1; 15.2) around the at least one submarine power cable (9),
B) steering the touchdown location guide device (15; 15.1; 15.2) subsea to a desired touchdown area on the seabed (17) with the at least one submarine power cable (9) arranged inside the touchdown location guide device (15; 15.1; 15.2), and
C) landing the at least one submarine power cable (9) at the desired touchdown area.

2. Method as claimed in claim 1, wherein step B) involves steering the touchdown location guide device (15; 15.1; 15.2) by means of a winch or crane (11) aboard the marine vessel (1), to which the touchdown location guide device (15; 15.1; 15.2) is connected by wire (13), or by means of a remotely operated vehicle, ROV, (16) connected to the touchdown location guide device (15; 15.1; 15.2).

3. Method as claimed in claim 1 or 2, wherein the touchdown location guide device (15; 15.1; 15.2) is openable, wherein step A) involves opening the touchdown location guide device (15; 15.1; 15.2) and placing the at least one submarine power cable (9) inside the touchdown location guide device (15; 15.1; 15.2).

4. Method as claimed in claim 3, wherein step A) involves operating an ROV 16 to open the touchdown location guide device (15; 15.1; 15.2), and to close the touchdown location guide device (15; 15.1; 15.2) subsea after the touchdown location guide device (15; 15.1; 15.2) has been placed around the at least one submarine power cable (9).

5. Method as claimed in any of the preceding claims, comprising D) removing the touchdown location guide device (15; 15.1; 15.2) from the at least one submarine power cable (9) after step C), when the laying has been completed, by means of an ROV (16).

6. Method as claimed in claim 5, wherein step D) involves operating an ROV (16) to open the touchdown location guide device (15; 15.1; 15.2).

7. Method as claimed in any of the preceding claims, wherein the touchdown location guide device (15; 15.1; 15.2) has a top (15a; 18f) and a bottom (15b; 18g), wherein the bottom (15b; 18g) is provided with at least one weight (15c; 19) making the touchdown location guide device (15; 15.1; 15.2) heavier at the bottom (15b; 18g) than at the top (15a; 18f).

8. Method as claimed in any of the preceding claims, wherein the touchdown location guide device (15.1) is a funnel device.

9. Method as claimed in claim 8, wherein the touchdown location guide device (15.1) comprises a deployment attachment point (15f), and a steering attachment point (15d) different from the deployment attachment point (15f), the method comprising deploying the touchdown location guide device (15.1) into the seawater from the marine vessel (1) with a winch or crane (11) connected to the deployment attachment point (15f) by means of a wire (13), and disconnecting the wire (13) from the deployment attachment point (15f) subsea and connecting the wire (13) to the steering attachment point (15d) prior to step B).

10. Method as claimed in claim 9, comprising performing the disconnecting and connecting of the wire (13) by means of an ROV (16).

11. Method as claimed in any of claims 8-10, wherein the steering attachment point (15d) is arranged at a narrow axial end (15e) of the touchdown location guide device (15.1), and the deployment attachment point (15f) is arranged between the steering attachment point (15d) and a wide axial end (15g) of the touchdown location guide device (15.1).

12. Method as claimed in any of claims 1-7, wherein the touchdown location guide device (15.2) is a roller window, comprising a plurality of rollers (18a-18d) arranged at an angle relative to each other, forming a frame.

13. Method as claimed in any of the preceding claims, wherein the at least one submarine power cable (9) is at least two submarine power cables (9).

14. Method as claimed in claim 13, wherein in steps A-C) the at least two submarine power cables (9) lay flat, side by side, on the vessel chute or lay wheel (5) as they are laid down in the seawater.

15. Method as claimed in any of the preceding claims, wherein the touchdown location guide device (15; 15.1; 15.2) comprises a touchdown location monitoring system generating position data for finding the desired touchdown area, wherein step C) involves finding the desired touchdown area based on the position data.
